# DEMANDE DE BREVET EUROPEEN

(11) **EP 0 802 309 A1**
(43) Date de publication de la demande: **22.10.1997**
(21) Numéro de dépôt: 97201114.2
(22) Date de dépôt: 15.04.1997
(51) Int. Cl.: F01N 3/02, B01D 45/16

(54) **Dispositif pour la purification de gaz d'échappement d'un moteur à combustion**

(30) Priorité: 17.04.1996 BE 9600335
(71) Demandeur: Eelbode, Hugo, 8740 Pittem (BE)
(72) Inventeur: Eelbode, Hugo, 8740 Pittem (BE)
(74) Mandataire: Leherte, Georges M.L.M., Dr.

(57) **Abrégé**

Dispositif pour la purification d'un fluide, muni d'un élément de purification creux (5), comprenant un compartiment de passage hélicoïdal (9) avec un délimitation extérieure essentiellement en forme de V (7, 8) pour ramasser les impuretés se trouvant dans le fluide, sous l'influence des forces centrifuges, dans un caniveau constitué par cette délimitation (7, 8), et pour diriger les impuretés ramassées (24) vers un moyen de séparation (21, 23, 28) prévu à la fin du compartiment de passage (9).

Un pot d'échappement (1) d'un moteur à combustion (25), muni d'un pareil élément de purification (5), pour la purification des gaz d'échappement. De préférence, un espace clos (15) est prévu entre au moins deux parois extérieures (7, 8), d'un élément de purification hélicoïdal (5), l'une disposée à côté de l'autre, et les gaz d'échappement sont dirigés à travers cet espace (15) pour obtenir un amortissement du bruit.

## Description

Cette invention à trait à un dispositif pour la purification d'un fluide, muni d'au moins un élément de purification creux, comprenant un compartiment de passage hélicoïdal pour ramasser les impuretés se trouvant dans le fluide sous l'influence des forces centrifuges, et un moyen de séparation pour séparer les impuretés ramassées du fluide.

L'invention a plus particulièrement également trait à un pot d'échappement d'un moteur à combustion, muni d'un pareil dispositif pour la purification des gaz d'échappement.

Dans FR-2 296 757 un dispositif pour la publication des gaz d'échappement, possédant les caractéristiques mentionnées ci-dessus fut décrit. Ce dispositif connu comprend un tuyau hélicoïdal d'une section annulaire ou carrée. Se joignant à la paroi extérieure de ce tuyau, des petites cuvettes de réception remplies de laine d'acier ont été prévues à plusieurs endroits, réparties sur la longueur du tuyau. A l'endroit de chacune des petites cuvettes de réception un orifice a été pratiqué dans la paroi extérieure du tuyau. Par ces orifices, l'espace enfermé par le tuyau est en communication avec l'espace enfermé par les petites cuvettes de réception.

Les gaz d'échappement sont dirigés par le tuyau pour séparer des particules de plomb polluantes dans les petites cuvettes de réception. Sous l'influence des forces centrifuges, une partie de ces particules de plomb est portée contre la face intérieure de la paroi extérieure et suit les gaz d'échappement en longeant cette paroi, jusqu'à l'un des orifices dans cette paroi et finit par passer cet orifice pour tomber dans une des petites cuvettes de réception, où la laine d'acier empêche que les particules de plomb sont emmenées plus loin par les gaz d'échappement.

Avant que les particules de plomb, glissant le long de la paroi, n'arrivent à l'un des orifices dans la paroi, elles peuvent être emmenées assez facilement par les gaz d'échappement, passant en turbulence, vers des endroits dans le tuyau éloignés de la paroi extérieure. Par conséquent, ce n'est qu'une partie des particules de plomb qui se retrouve chaque fois dans une petite cuvette de réception. Afin d'obtenir une pureté acceptable des gaz d'échappement il faut prévoir plusieurs petites cuvettes de réception. D'une part, les gaz d'échappement quittant le tuyau contiennent encore trop de particules polluantes (telles que des particules de suie par exemple) et d'autre part le vidange ou le remplacement de plusieurs petites cuvettes de réception est un travail assez compliqué, qui prend du temps.

L'objet de l'invention est de prévoir un dispositif pour la purification d'un fluide ayant les caractéristiques indiquées au premier paragraphe de cette description, mais sans les désavantages du dispositif connu mentionnés ci-dessus.

L'objet de l'invention est plus particulièrement de prévoir un tel dispositif, fonctionnant de manière plus efficace que le dispositif connu et qui puisse livrer un fluide d'une grande pureté, même si l'on n'a prévu qu'un seul moyen de séparation.

Selon l'invention, ces objets furent obtenus en exécutant l'élément de purification d'un dispositif ayant les caractéristiques indiquées au premier paragraphe de cette description de telle manière que la limitation extérieure d'au moins une partie du compartiment de passage soit essentiellement en forme de V.

Les impuretés se trouvant dans le fluide passant par le compartiment de passage hélicoïdal sont chassées contre la limitation extérieure sous l'influence des forces centrifuges. Les parois du compartiment de passage s'étendent dans un sens ne faisant qu'un angle de faible ouverture avec le sens radial, de sorte que les impuretés - sous l'influence des forces centrifuges - dépassant ces bords en glissant, sont facilement transportées vers la partie du compartiment de passage la plus éloignée de l'axe central. Par conséquent, les impuretés sont ramassées en une couche compacte d'une largeur limitée dans le caniveau essentiellement en forme de V, constitué par la limitation extérieure.

Les impuretés passent dans le caniveau (emportées par le fluide) vers un moyen de séparation. Les impuretés peuvent être éloignées difficilement du caniveau par le fluide passant, de sorte que presque toutes les impuretés ramassées dans le caniveau arrivent au moyen de séparation. Par conséquent ia pureté du fluide s'écoulant de l'élément de purification sera donc beaucoup plus grande qu'il ne serait le cas en utilisant le dispositif connu. Lorsqu'une longueur relativement importante du compartiment de passage est munie d'une limitation essentiellement en forme de V, selon l'invention, un seul moyen de séparation, prévu à la fin de ladite longueur, suffira pour obtenir un fluide d'une grande pureté.

Dans une forme de réalisation avantageuse de l'invention, le compartiment de passage est limité latéralement par deux parois hélicoïdales qui se rapprochent l'une de l'autre et qui se joignent en formant un angle. Dans cette forme de réalisation les parois latérales du compartiment de passage s'étendent sur toute leur hauteur dans un sens faisant un angle de petite ouverture avec le sens radial. Par conséquent les particules glissant le long les parois latérales se déplacent très facilement - sous l'influence des forces centrifuges - vers l'extérieur jusque dans le caniveau en forme de V constitué par les parois.

De préférence, les bords intérieurs des parois hélicoïdales s'étendent respectivement selon une première et une deuxième hélice qui sont décalées l'une par rapport à l'autre selon le sens de leurs axes d'hélice, alors que les bords extérieurs des parois hélicoïdales s'étendent selon une troisième hélice d'un diamètre plus important que la première et la deuxième hélice.

Dans une forme de réalisation particulièrement préférentielle les bords intérieurs des parois hélicoïdales se joignent à un élément de base central, de sorte que le compartiment de passage soit limité à l'intérieur par cet élément de base.

Lorsque l'élément de purification creux possède également une surface extérieure hélicoïdale, les espaces situés entre les spires consécutives sont également délimités par l'élément de base central. Par conséquent l'élément de purification est particulièrement approprié a être prévu dans un pot d'échappement d'un moteur à combustion. Puisque les espaces situés entre les spires peuvent être utilisés en tant qu'espaces pour amortir le bruit. Les caractéristiques d'une telle forme de réalisation d'un pot d'échappement seront éclaircies ci-après.

Une autre forme de réalisation particulièrement préférentielle est caractérisée en ce qu'un seul moyen de séparation est prévu dans le compartiment de passage à proximité de l'orifice d'écoulement du fluide purifié, alors que ladite limitation extérieure en forme de V est prévue à diriger les impuretés ramassées dans le sens de passage vers le moyen de séparation.

De préférence, le moyen de séparation comprend une paroi de séparation prévue dans le compartiment de passage, qui partage le compartiment de passage sur une longueur limitée, pendant que l'espace entre la paroi de séparation et la limitation extérieure en forme de V est en communication avec un moyen d'évacuation des impuretés.

L'invention a également trait à un pot d'échappement pour un moteur à combustion, muni d'un dispositif pour la purification des gaz d'échappement selon l'invention.

Avec un tel pot d'échappement on obtient des gaz d'échappement particulièrement purs. Ainsi des particules de suie entre autres peuvent être éloignées des gaz d'échappement des moteurs à combustion - plus particulièrement des moteurs diesel - d'une manière très efficace. Par conséquent, l'on obtient une réduction considérable de la pollution de l'environnement causée par le fonctionnement des moteurs à combustion.
En plus, l'élément de purification creux peut être exécuté et incorporé dans un pot d'échappement de telle manière que le rendement du moteur à combustion ne soit pas moins favorable que lorsqu'on utilise les pots d'échappement connus.

Dans une forme de réalisation particulière du pot d'échappement selon l'invention un espace d'insonorisation est prévu entre au moins deux parties du compartiment de passage afin de réduire le niveau du bruit, et les gaz d'échappement sont dirigés à travers cet espace d'insonorisation.

On obtient un pot d'échappement d'une construction compacte, lorsque l'élément de purification creux a une surface extérieure de forme hélicoïdale, alors que l'espace d'insonorisation, à l'extérieur du compartiment de passage, est prévu entre deux parties des parois de l'élément de purification s'étendant l'une à côté de l'autre, et pendant que deux parties du compartiment de passage qui sont en communication respectivement avec un orifice d'admission et un orifice d'écoulement de l'élément de purification sont en communication l'une avec l'autre par l'espace d'insonorisation.

Un tel pot d'échappement peut être réalisé de façon très simple lorsque l'élément de purification comprend deux parois hélicoïdales, qui délimitent latéralement le compartiment de passage hélicoïdal, alors que les bords intérieurs de ces parois hélicoïdales se joignent à un élément de base central, de sorte que le compartiment de passage soit limité à l'intérieur par cet élément de base, alors que les bords extérieurs des parois hélicoïdales se joignent à la surface intérieure d'un manteau cylindrique et alors que l'espace d'insonorisation est limité par deux parties respectivement des parois hélicoïdales, de l'élément de base et le manteau cylindrique, qui s'étendent l'une à côté de l'autre.

Dans la forme de réalisation la plus préférentielle ce pot d'échappement comprend un premier et un deuxième espace d'amortissement, alors que le premier espace d'amortissement est en communicacion avec la première et la deuxième partie du compartiment de passage par des passages prévus dans les parois de l'élément de purification, alors que le deuxième espace d'amortissement est en communication avec la deuxième et la troisième partie du compartiment de passage par des passages dans les parois de l'élément de purification, alors que la première et la troisième partie du compartiment de passage sont en communication respectivement avec l'orifice d'admission et l'orifice d'écoulement, de sorte que les gaz d'échappement, depuis un orifice d'admission, doivent passer successivement par la première partie du compartiment de passage, par le premier espace d'amortissement, par la deuxième partie du compartiment de passage, par le deuxième espace d'amortissement et par la troisième partie du compartiment de passage pour atteindre un orifice d'écoulement, et alors que les passages mettant la deuxième partie du compartiment de passage en communication avec le premier et le deuxième espace d'amortissement sont prévus de telle manière que les gaz d'échappement dans cette deuxième partie doivent se déplacer suivant l'axe longitudinal du compartiment de passage hélicoïdal, avant qu'ils ne puissent entrer dans le deuxième espace d'amortissement.

Avec un tel pot d'échappement on obtient une insonorisation particulièrement bonne.

L'invention sera éclaircie plus amplement dans la description non restrictive d'une forme de réalisation possible d'un pot d'échappement d'un moteur diesel selon l'invention ci-après.

Dans cette description référence sera faite aux plans ci-annexés, dont
la figure 1 est une représentation schématique d'une vue latérale d'un moteur diesel muni d'un pot d'échappement selon l'invention pour enlever les particules de suie des gaz d'échappement;
la figure 2 représente une coupe longitudinale du pot d'échappement de la figure 1
la figure 3 est une vue latérale de l'élément de purification du pot d'échappement de la figure 1
la figure 4 est une coupe longitudinale de l'élément de purification représenté à la figure 3, à laquelle les particules de suie sont indiquées
la figure 5 est une coupe transversale de la première spire de l'élément de purification d'un pot d'échappement selon la figure 2 (vue de droite à gauche), à laquelle les particules de suie et le sens de passage des gaz d'échappement entrant sont indiqués.
la figure 6 est une coupe par la dernière spire de l'élément de purification d'un pot d'échappement selon la figure 2 (vue de droite à gauche), à laquelle les particules de suie et le sens de passage des gaz d'échappement purifiés et sortant sont indiqués.

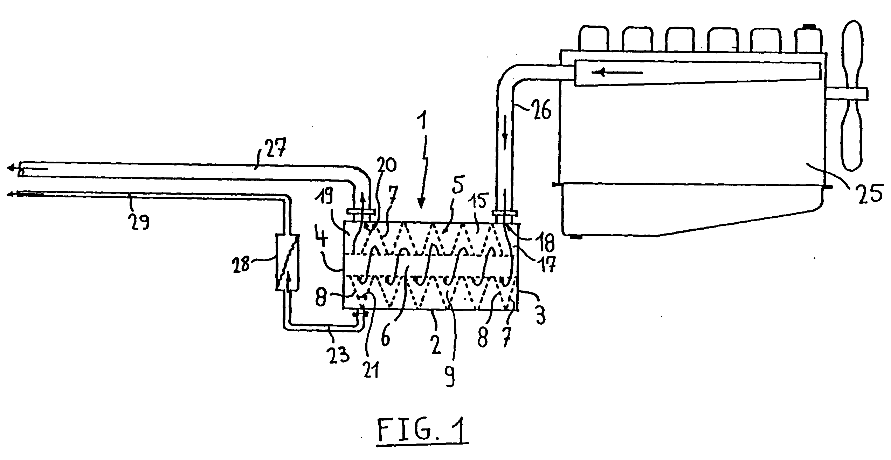

Une forme de réalisation préférentielle (voir les figures 1, 2 et 3) d'un pot d'échappement (1) selon l'invention comprend un boîtier (2, 3, 4), comprenant un manteau cylindrique (2), une paroi plane avant (3) et arrière (4). Dans un espace clos à l'intérieur de ce boîtier (2, 3, 4) un élément de purification (5) est installé, comprenant un tuyau cylindrique central (6) qui s'étend sur toute la longueur du boîtier (2, 3, 4) dans le sens de l'axe longitudinal, et une paroi hélicoïdale avant (7) et arrière (8) délimitant latéralement un compartiment de passage hélicoïdal (9).

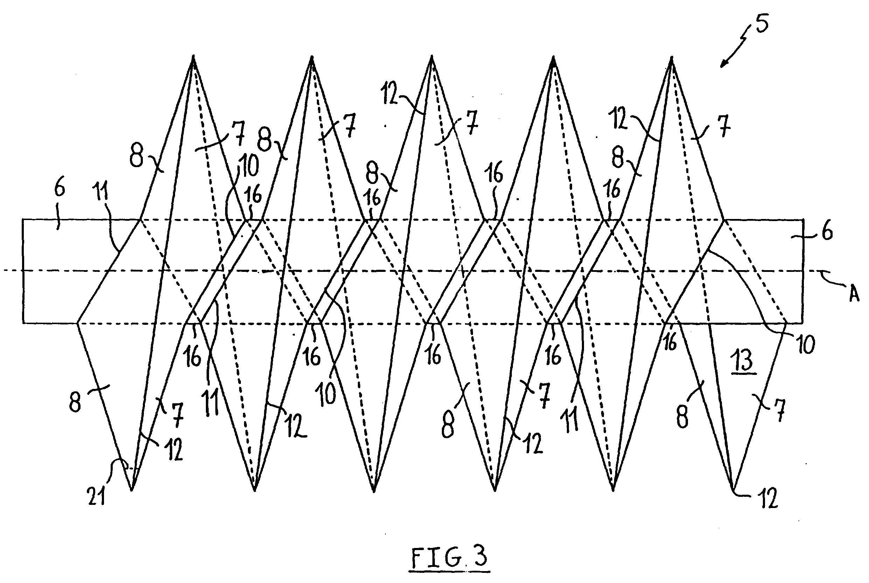

Les bords intérieurs (10), (11) des parois hélicoïdales respectives (7), (8) se joignent au tuyau cylindrique (6) et s'étendent dans le sens d'une hélice respective (voir la figure 3), l'hélice de l'un des bords (11) étant décalée dans le sens de l'axe longitudinal (A) du tuyau central (6) par rapport à l'hélice de l'autre bord (10).

Les parois (7), (8) s'étendent depuis le tuyau central (6), se rapprochent l'une de l'autre et sont reliées l'une à l'autre par leurs bords extérieurs en formant un angle. Ces bords extérieurs (12) se joignent à l'intérieur du manteau cylindrique (2) et s'étendent suivant une hélice commune.

Les parois (7), (8) et le tuyau cylindrique (6) constituent un compartiment de passage hélicoïdal (9) d'une section transversale triangulaire.

Ce compartiment de passage (9) est ouvert des deux extrémités, de manière que les gaz d'échappement puissent entrer dans l'élément de purification (5) par l'une des extrémités ouvertes - l'orifice d'admission (13) - et qu'ils puissent sortir de l'élément de purification (5) par l'autre extrémité ouverte - l'orifice d'écoulement.

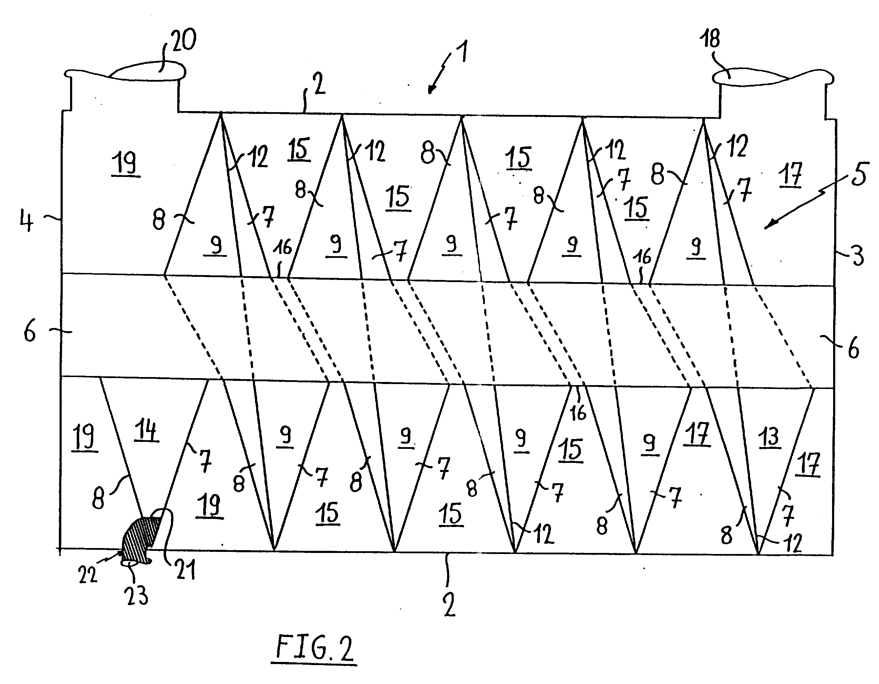

Parce que les bords extérieurs (12) des parois hélicoïdales (7), (8) se joignent à la face intérieure du manteau cylindrique (2), des espaces clos sont formés dans le boîtier (2), (3), (4) entre les parties opposées de la face extérieure des parois (7), (8) (voir la figure 2). Ces espaces (15) sont enfermés à l'intérieur par les parties (16) du tuyau central (6) se trouvant à l'extérieur du compartiment de passage (9) et sont délimités latéralement par les parois (7), (8) de l'élément de purification (5) et limités à l'extérieur par le manteau (2).

La première spire de la paroi avant (7), la paroi plane avant (3) du boîtier, le tuyau (6) et le manteau (2) délimitent un compartiment d'admission (17). Dans la partie du manteau (2) qui délimite le compartiment d'admission (17) un orifice d'admission (18) a été prévu pour les gaz d'échappement à purifier.

La dernière spire de la paroi arrière (8), la paroi plane arrière (4) du boîtier, le tuyau (6) et le manteau (2) délimitent un espace d'écoulement (19). Dans la partie du manteau (2) qui délimite l'espace d'écoulement (19), un orifice d'écoulement (20) pour les gaz d'échappement est prévu.

A proximité des bords extérieurs (12) des parois (7), (8), une paroi de séparation (21) est prévue dans la dernière spire du compartiment de passage (9), qui s'étend suivant le sens d'écoulement des gaz d'échappement et qui relie les deux parois (7), (8). La conduite triangulaire entre les parois (7), (8) et la paroi de séparation (21) a une extrémité ouverte qui se trouve dans le plan de l'orifice d'écoulement (14) qui est raccordé à une conduite d'évacuation (23), pour les particules de suie (24) se trouvant dans les gaz d'échappement, qui s'étend par un orifice (22) dans le manteau (2).

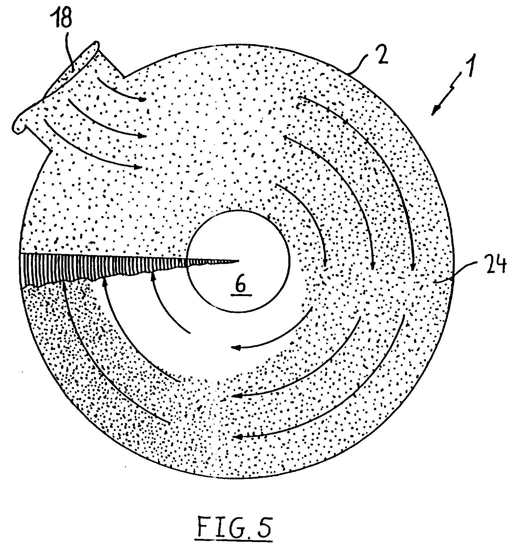

Les gaz d'échappement d'un moteur diesel (25) (voir la figure 1) sont introduits dans l'espace d'admission dans le boîtier par un tuyau d'amenée (26) raccordé à l'orifice d'admission (18) et entrent par l'orifice d'admission (13) dans le compartiment de passage hélicoïdal (9). Aux figures 1, 5 et 6, le sens d'écoulement des gaz d'échappement est indiqué par des flèches. Les gaz d'échappement passent par le compartiment de passage hélicoïdal (9), quittent le compartiment de passage (9) par l'orifice d'écoulement (14) et arrivent ainsi dans l'espace d'écoulement (19) et finalement passent vers l'extérieur par l'orifice d'évacuation (20) et par un tuyau d'évacuation (27), raccordé à cet orifice d'évacuation (20).

Durant le trajet des gaz d'échappement à travers le compartiment de passage hélicoïdal (9) les particules de suie (24) se trouvant dans les gaz d'échappement sont chassées vers la partie extérieure du compartiment de passage (9), sous l'influence des forces centrifuges. Les particules de suie (24) sont emmenées par les gaz d'échappement. Dans la mesure où les gaz d'échappement pénètrent dans le compartiment de passage (9), de plus en plus de particules de suie (24) sont ramassée contre la partie extérieure des parois hélicoïdales (7), (8).

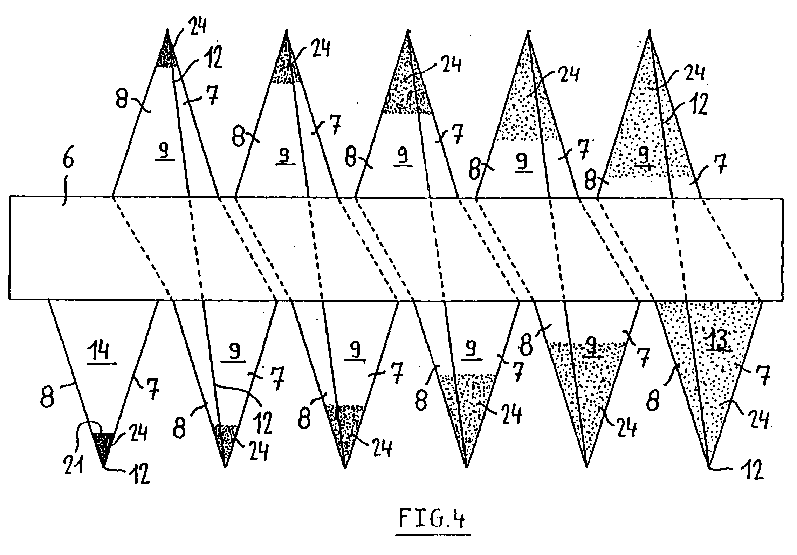

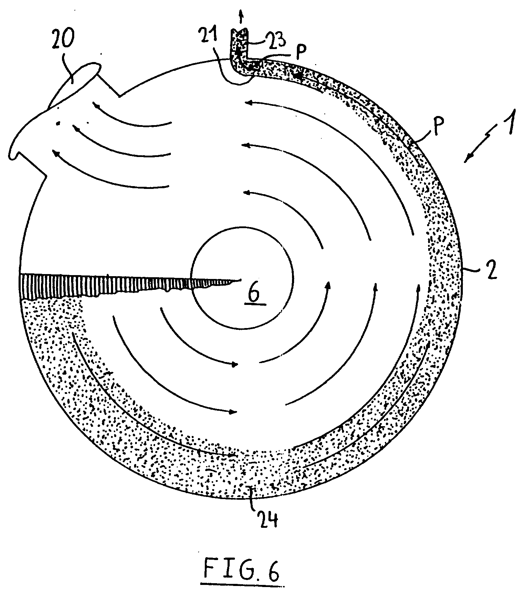

Ceci se voit clairement dans les figures 4, et 6. Finalement les particules de suie (24) sont ramassée, formant une couche compacte dans le caniveau en forme de V, constitué par les parties extérieures des parois (7), (8) et elles arrivent dans la conduite constituée par la paroi de séparation (21) et les parois (7), (8), pour finir dans la conduite d'évacuation (23) (voir les flèches P à la figure 6).

La conduite d'évacuation (23) débouche dans un filtre à suie (28), où les particules de suie (24) sont retenues. Une partie des gaz d'échappement passe par la conduite d'évacuation (23) vers le filtre à suie (28) et depuis ce filtre (28) elle peut s'échapper vers l'extérieur par un tuyau d'évacuation (29).

Le premier et le deuxième espace (15) - vus depuis la paroi avant (3) du boîtier - qui sont délimités par les faces extérieures opposées l'une à l'autre des parois hélicoïdales (7), (8), par le manteau (2) et par les parties du tuyau central se trouvant à l'extérieur du compartiment de passage (9) font fonction d'espace d'amortissement (15) pour amortir le bruit.

A cet effet, des orifices ont été prévus (ne pas représentés dans les figures) dans les parois (7), (8) délimitant ces espaces. Ces orifices permettent aux gaz d'échappement de passer d'une première partie du compartiment de passage (9) vers une deuxième partie du compartiment de passage (9) en passant par le premier espace d'amortissement (15) et de là de passer vers une troisième partie du compartiment de passage par le deuxième espace d'amortissement (15). A cet effet, les différentes parties du compartiment de passage (9) sont séparées l'une de l'autre par des parois non représentées sur les plans, alors que la première et la troisième partie sont en communication respectivement avec l'orifice d'admission (13) et l'orifice d'écoulement (14).

Donc, depuis l'orifice d'admission (13), les gaz d'échappement passent consécutivement par la première partie du compartiment de passage (9), par le premier espace d'amortissement (15), par la deuxième partie du compartiment de passage (9), par le deuxième espace d'amortissement (15) et par la troisième partie du compartiment de passage (9) vers l'orifice d'écoulement (14).

Les orifices par où les gaz d'échappement peuvent entrer dans le premier et le deuxième espace d'amortissement (15) ne se trouvent pas en face des orifices par où les gaz d'échappement peuvent entrer dans la deuxième partie, respectivement dans la troisième partie du compartiment de passage (9). Les orifices par où les gaz d'échappement peuvent entrer dans la deuxième partie du compartiment de passage (9) ne se trouvent pas en face des orifices par où les gaz d'échappement, depuis cette deuxième partie, peuvent entrer dans le deuxième compartiment d'insonorisation (15).

Les orifices sont situés de telle manière que les gaz d'échappement doivent se déplacer dans les différentes parties du compartiment de passage (9) suivant le sens longitudinal du compartiment de passage hélicoïdal (9). Ce qui fait qu'une insonorisation optimale est atteinte.

Avec ce pot d'échappement (1) on obtient des gaz d'échappement d'une grande pureté.

La paroi de séparation (21) est réglable dans le sens radial. En installant la paroi de séparation (21) à une distance plus grande ou plus réduite des bords extérieurs (12) des parois (7), (8), une quantité de particules de suie (24) plus ou moins grande peut être enlevée des gaz d'échappement.

Le pot d'échappement (1), selon l'invention peut être exécuté de telle manière que les gaz d'échappement qui y passent subissent une contre-pression qui ne diffère que peu de la contre-pression que l'on obtient en utilisant les pots d'échappement connus. Ce pot d'échappement (1) n'a donc aucune influence défavorable sur le rendement du moteur (25).

Un avantage supplémentaire du pot d'échappement (1) selon l'invention est que, au cas d'une obturation complète ou partielle de la conduite constituée entre la paroi de séparation (21) et la limitation extérieure (7), (8) ou de la conduite d'évacuation (23) y raccordée, le débit des gaz d'échappement par l'orifice d'écoulement (14) est encore suffisamment important, de sorte qu'aucune augmentation défavorable de ladite contre-pression ne se manifeste, et de sorte que le moteur peut continuer à tourner à un rendement presque inchangé.

## Revendications

1. Dispositif pour la purification d'un fluide, muni d'au moins un élément de purification creux (5), comprenant un compartiment de passage hélicoïdal (9) pour ramasser les impuretés (24) se trouvant dans le fluide par les forces centrifuges, et un moyen de séparation (21, 23, 28) pour séparer les impuretés ramassées du fluide, **caractérisé en ce que** la limitation extérieure (7, 8) d'au moins une partie du compartiment de passage (9) est essentiellement en forme de V.

2. Dispositif pour la purification d'un fluide, selon la revendication 1, **caractérisé en ce que** le compartiment de passage (9) est délimité latéralement par deux parois hélicoïdales (7), (8), qui se rapprochent l'une de l'autre et qui se joignent en formant un angle.

3. Dispositif pour la purification d'un fluide, selon la revendication 2, **caractérisé en ce que** les bords intérieurs (10), (11) des parois hélicoïdales (7), (8) s'étendent suivant une première et une deuxième hélice , qui sont décalées l'une par rapport à l'autre suivant le sens de leurs axes d'hélice pratiquement parallèles et en ce que les bords extérieurs (12) des parois hélicoïdales (7), (8) s'étendent suivant une troisième hélice commune, d'un diamètre plus grand que celui de la première et de la deuxième hélice.

4. Dispositif pour la purification d'un fluide, selon la revendication 3, **caractérisé en ce que** les bords intérieurs (10), (11) des parois hélicoïdales (7), (8) se joignent à un élément de base central (6), de manière que le compartiment de passage (9) soit délimité à l'intérieur par cet élément de base (6).

5. Dispositif pour la purification d'un fluide, selon l'une des revendications précédentes, **caractérisé en ce qu'**un seul moyen de séparation (21) est prévu à proximité de l'orifice d'écoulement (20) dans le compartiment de passage (9) pour le fluide purifié, et en ce que ladite délimitation extérieure en forme de V (7, 8) est prévue pour diriger les impuretés ramassées (24) dans le sens de passage vers le moyen de séparation (21).

6. Dispositif pour la purification d'un fluide, selon l'une des revendications précédentes, **caractérisé en ce que** le moyen de séparation (21, 23, 28) comprend une paroi de séparation (21) prévue dans le compartiment de passage (9), qui partage le compartiment de passage (9) sur une longueur limitée, et en ce que l'espace entre la paroi de séparation (21) et la délimitation extérieure en forme de V (7, 8) est en communication avec un moyen d'évacuation (23) pour les impuretés (24).

7. Pot d'échappement (1) pour un moteur à combustion (25) muni d'un dispositif pour la purification des gaz d'échappement, selon l'une des revendications précédentes.

8. Pot d'échappement (1) pour un moteur à combustion (25), selon la revendication 7, **caractérisé en ce qu'**un espace d'amortissement (15) est prévu entre au moins deux parties du compartiment de passage (9) pour l'amortissement du bruit, et en ce que les gaz d'échappement sont dirigés à travers cet espace d'amortissement (15).

9. Pot d'échappement (1) pour un moteur à combustion (25), selon la revendication 8, **caractérisé en ce que** l'élément de purification (5) possède une surface extérieure hélicoïdale, et en ce que l'espace d'amortissement (15) est prévu à l'extérieur du compartiment de passage (9) entre deux partie des parois (7), (8) de l'élément de purification (5), s'étendant l'une à côté de l'autre, et en ce que deux parties du compartiment de passage (9) qui sont en communication, respectivement avec un orifice d'admission (18) et un orifice d'écoulement (20) de l'élément de purification (5), sont en communication l'une avec l'autre par l'espace d'amortissement (15).

10. Pot d'échappement (1) pour un moteur à combustion (25), selon la revendication 9, **caractérisé en ce que** l'élément de purification (5) comprend deux parois hélicoïdales (7), (8), délimitant latéralement le compartiment de passage hélicoïdal (9); en ce que les bords intérieurs (10), (11) de ces parois hélicoïdales (7), (8) se joignent à un élément de base central (6), de manière que le compartiment de passage (9) soit délimité à l'intérieur par cet élément de base (6); en ce que les bords extérieurs (12) des parois hélicoïdales (7), (8) se joignent à la surface intérieure d'un manteau cylindrique (2), et en ce que l'espace d'amortissement (15) est limité par deux parties des parois hélicoïdales respectives (7), (8), s'étendant l'une à côté de l'autre, par l'élément de base (6) et par le manteau cylindrique (2).

11. Pot d'échappement (1) pour un moteur à combustion (25), selon la revendication 10, **caractérisé en ce que** le pot d'échappement (1) comprend un premier (15) et un deuxième espace d'amortissement (15); en ce que le premier espace d'amortissement (15) est en communication avec la première et la deuxième partie du compartiment de passage (9) par des passages dans les parois (7), (8); en ce que le deuxième espace d'amortissement (15) est en communication avec la deuxième et la troisième partie du compartiment de passage (9) par des passages dans les parois (7), (8) de l'élément de purification (5); en ce que la première et la deuxième partie du compartiment de passage sont en communication respectivement avec l'orifice d'admission (18) et avec l'orifice d'écoulement (20), de manière que les gaz d'échappement, depuis l'orifice d'admission (18), doivent passer successivement par la première partie du compartiment de passage (9), par le premier espace d'amortissement (15), par la deuxième partie du compartiment de passage (9), par le deuxième espace d'amortissement (15) et par la troisième partie du compartiment de passage (9) pour arriver à l'orifice d'écoulement (20), et en ce que les passages mettant la deuxième partie du compartiment de passage (9) en communication avec le premier (15) et le deuxième (15) espace d'amortissement sont prévus de telle manière que les gaz d'échappement dans cette deuxième partie doivent se déplacer dans le sens longitudinal du compartiment de passage hélicoïdal (9) avant qu'ils ne puissent entrer dans le deuxième espace d'amortissement (15).
